# EUROPÄISCHE PATENTSCHRIFT

(11) **EP 3 252 435 B1**
(45) Veröffentlichungstag und Bekanntmachung des Hinweises auf die Patenterteilung: **07.11.2018**
(21) Anmeldenummer: 17000920.3
(22) Anmeldetag: 31.05.2017
(51) Int. Cl.: G01F 1/00, G01F 1/66, G01P 5/26

(54) **VERFAHREN ZUR DURCHFLUSSMESSUNG IN KANALROHREN**
METHOD FOR MEASURING THE FLOW RATE IN SEWER PIPES
PROCÉDÉ DE MESURE DE DÉBIT DANS DES CANALISATIONS D'ÉGOUT

(30) Priorität: 01.06.2016 DE 102016006558
(43) Veröffentlichungstag der Anmeldung: 06.12.2017
(73) Patentinhaber: Perwatec UG (haftungsbeschränkt), 89407 Dillingen an der Donau (DE)
(72) Erfinder: Komposch, Markus, 89426 Mödingen (DE)
(74) Vertreter: Gallo, Wolfgang

(56) Entgegenhaltungen:
- EP-A1- 3 018 483
- WO-A1-94/24522
- WO-A2-03/087732
- DE-A1-102007 063 041
- US-A1- 2001 050 116

## Beschreibung

Die Erfindung betrifft ein Verfahren zur Durchflussmessung in Kanalrohren, insbesondere in Kanalrohren von Abwasserkanälen oder verrohrten Bachläufen.

Aus der WO 2003/087 732 A2 ist ein Verfahren zur Durchflussmessung in Kanalschächten bekannt, das als optisches Messverfahren ausgebildet ist, bei welchem der Flüssigkeitspegel im Öffnungsquerschnitt des Kanalrohrs optisch erfasst und hieraus unter Berücksichtigung der bekannten oder gemessenen Fließgeschwindigkeit die Durchflussmenge berechnet wird.

Bei einer Variante des bekannten Verfahrens wird ein optisches Bild des Kanalschachtbodenbereichs aus einer Position über oder in der oberen Öffnung eines Kanalschachts oder aus einer Position innerhalb des Kanalschachts erzeugt, bei welchem die Einlassöffnung und/oder die Auslassöffnung des Abwasserkanals in den bzw. aus dem Kanalschacht in ovaler Verzeichnung sichtbar ist, und wobei aus dem genommenen optischen Bild an der Abbildung der Einlassöffnung oder der Auslassöffnung die relativen Längen des Öffnungsdurchmessers des Kanalrohrs und der Breite des Wasserstromfließpegels in der Öffnung gemessen und aus deren Verhältnis und den bekannten Abmessungen und der bekannten Querschnittsgeometrie der Öffnung der tatsächliche Fließquerschnitt berechnet wird.

Bei einer anderen Variante des bekannten Verfahrens wird ein vom Kanalschachtbodenbereich eines Kanalschachts aus in den zuführenden oder den abführenden Kanalrohrabschnitt hinein gesehenes optisches Bild des Kanalrohrs erzeugt, in welchem die Stoßfuge zwischen zwei aufeinanderfolgenden Kanalrohrstücken im Bereich der nächstliegenden Muffenverbindung als gegebenenfalls etwas perspektivisch verzeichneter Ring sowie der Fließpegel sichtbar ist, und wobei aus dem genommenen optischen Bild an der Abbildung der Stoßfuge die relativen Längen des Öffnungsdurchmessers und der Breite des Wasserstromfließpegels gemessen und aus deren Verhältnis und den bekannten Abmessungen sowie der bekannten Querschnittsgeometrie des Kanalrohrs der tatsächliche Fließquerschnitt berechnet wird.

Bei dem bekannten Verfahren kann mittels des optischen Messverfahrens nur der Fließquerschnitt im Kanalrohr bestimmt werden. Um den Durchfluss ermitteln zu können, ist aber zusätzlich eine Messung der Fließgeschwindigkeit des Wassers im Kanal notwendig.

Aufgabe der Erfindung ist es demgegenüber, ein Verfahren zur Durchflussmessung in Kanalrohren zu schaffen, wobei mit einem einzigen Messvorgang alle Kriterien zur Berechnung der Durchflussmessung erfasst werden können.

Diese Aufgabe wird gemäß der Erfindung durch das im unabhängigen Verfahrensanspruch angegebene Verfahren gelöst.

Bei dem erfindungsgemäßen Konzept erfolgt eine Erfassung des Fließquerschnitts und der Neigung, also des Gefälles, des Kanalrohrs. Aus dem Gefälle wird die Fließgeschwindigkeit berechnet, die in einem fixen Zusammenhang mit der Neigung des Kanalrohrs steht. Aus der Fließgeschwindigkeit und dem Fließquerschnitt kann die Durchflussmenge pro Zeiteinheit berechnet werden.

Die Messung erfolgt optisch mit einer Einrichtung, die eine Kamera aufweist, die mit einem Laser kombiniert ist. Dabei ist die optische Achse des Lasers exakt parallel zur optischen Achse der Kamera ausgerichtet. Der Laser erzeugt über eine diffraktive Projektionslinse mindestens zwei mit unterschiedlichen Divergenzwinkeln in den Kanal bzw. in das Rohr geworfene Laserstrahlen, die ringförmig sind und die Gestalt eines dünnen Kegelmantels haben. Dadurch werden mindestens zwei beabstandete Linien durch das Auftreffen dieser Laserstrahlen an der Kanalwand erzeugt, die mittels der Kamera erfassbar sind. Wenn das Kanalrohr einen kreisförmigen Querschnitt hat und der Laser mit seiner optischen Achse in der Mitte des Kreisquerschnitts positioniert wird, und wenn die optische Achse des Lasers mit der Kanalachse zusammenfällt, erscheinen die von der Kamera gesehenen mindestens zwei beabstandeten Linien, die von den mindestens zwei Laserstrahlen an der Kanalwand erzeugt werden, als konzentrische Kreislinien.

Wenn nun die optische Achse seitlich mit der Längsachse des Kanals fluchtend ausgerichtet ist, d. h. mit der Längsachse des Kanals in einer vertikalen Axialebene liegt, kann die optische Achse des Lasers auch neigungsmäßig exakt mit der Kanalachse ausgerichtet werden. Das ist dann erreicht, wenn die mindestens zwei Linien als unverzerrte konzentrische Kreislinien erscheinen. Dann kann die Neigung des Kanals und damit dessen Gefälle mittels einer mit dem Laser und der Kamera kombinierten Neigungsmeßeinrichtung ermittelt werden.

Alternativ dazu kann der Laser mit Hilfe einer Neigungsmeßeinrichtung mit seiner horizontalen Achse exakt horizontal ausgerichtet werden. Die mindestens zwei von den mindestens zwei Laserstrahlen erzeugten Kreislinien auf der Kanalwand wären nur dann unverzerrte konzentrische Kreislinien, wenn der Kanal exakt horizontal verliefe, was bei einem Kanal nicht der Fall ist. Die mindestens zwei Linien erscheinen daher als nicht mehr konzentrische, sondern exzentrisch verzeichnet Kreislinien, und aus dem Maß der der Exzentrizität der mindestens zwei Linien und den bekannten Divergenzwinkeln der mindestens zwei Laserstrahlen kann die Neigung des Kanals bestimmt werden.

Vorteilhafte Einzelheiten und Ausgestaltungen der Erfindung sind Gegenstand der Unteransprüche.

Die Erfindung wird nachstehend anhand von Ausführungsbeispielen unter Bezugnahme auf die anliegenden Zeichnungen mehr im einzelnen beschrieben. In den Zeichnungen zeigt:
- Fig. 1: eine schematische Darstellung der optischen Parametererfassung in dem theoretischen Fall eines horizontalen Kanals,
- Fig. 2: eine schematische Darstellung ähnlich Fig. 1 bei einem geneigten Kanal bei horizontal ausgerichteter Kamera-Laser-Kombination,
- Fig. 3: eine schematische Darstellung ähnlich Fig. 2 mit einem neigbaren Kreuzlaser,
- Fig. 4: schematisch den Aufbau einer Messanordnung über einem Kanalschacht mit einem Dreibein-Stativ,
- Fig. 5: schematisch den Aufbau einer Messanordnung in einem Kanalschacht mit einem Gelenkarm,
- Fig. 6: schematisch den Aufbau einer Messanordnung in einem Kanalschacht mit fester Anbringung im Kanalschacht für eine Langzeitmessung, und
- Fig. 7: schematisch eine andere Ausführungsform einer in einem Kanalschacht fest angeordneten Messanordnung für eine Langzeitmessung.

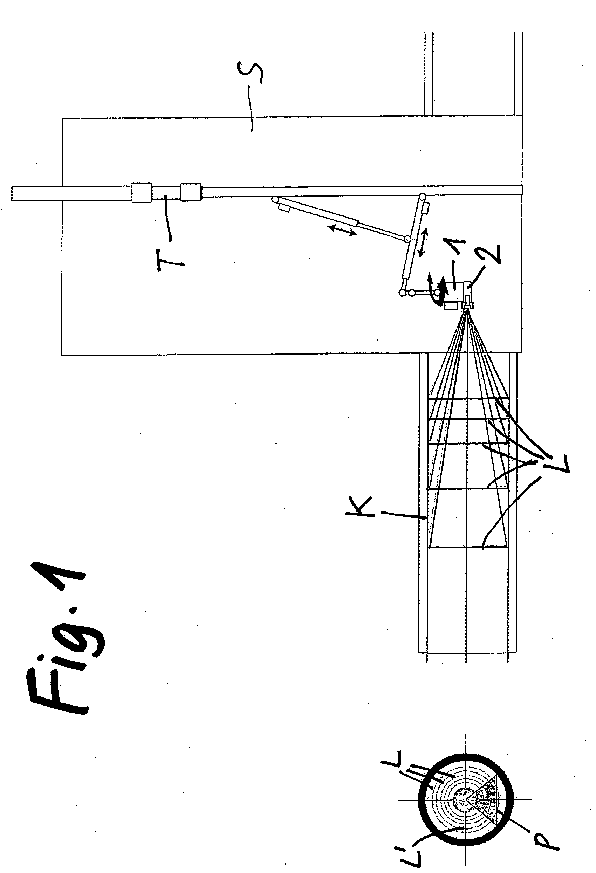

Figur 1 zeigt schematisch zur Verdeutlichung des Messprinzips eine Messanordnung zur Durchführung des erfindungsgemäßen Verfahrens in einem Kanalschacht S in Verbindung mit einem Kanalrohr K ohne Neigung, also horizontal verlaufend, was in der Praxis nicht der Fall ist.

Die Messanordnung im Kanalschacht S umfasst eine an einem Traggestell angeordnete Kombination aus einer Kamera 1 und einem Laser 2, deren optische Achsen genau parallel zueinander ausgerichtet sind. Die Kamera-Laser-Kombination 1, 2 ist um eine Hochachse drehbar sowie neigungsverstellbar an dem Traggestell T angeordnet.

Das Kanalrohr K hat einen kreisrunden Querschnitt, und die Kamera-Laser-Kombination wird so angeordnet und ausgerichtet, dass der Laser 2 mit seiner optischen Achse in der Mitte des Kreisquerschnitts des Kanalrohrs K positioniert ist. Zum Ausrichten des Lasers 2 dient die Kamera, mittels welcher die Blickrichtung des Lasers überwacht wird. Dabei kann die Ausrichtung automatisch mittels eines Rechners erfolgen, der das von der Kamera 1 erfasste Bild auswertet, und der über entsprechende mechanische Mittel und Antriebe die Kamera 1 mit dem Laser 2 positioniert und ausrichtet.

Der Laser 2 erzeugt über eine diffraktive Projektionslinse mindestens zwei mit unterschiedlichen Divergenzwinkeln in das Kanalrohr K geworfene Laserstrahlen, die jeweils einen kreisrunden Querschnitt in Gestalt eines dünnen Kegelmantels haben.

Dadurch werden mindestens zwei beabstandete Linien durch das Auftreffen dieser beiden kegelmantelförmigen Laserstrahlen an der Kanalwand erzeugt, die mittels der Kamera 1 erfassbar sind. In der Zeichnung nach Figur 1 sind fünf solche an der Kanalwand durch Verwendung von fünf kegelmantelförmigen Laserstrahlen mit unterschiedlichen Divergenzwinkeln erzeugte Linien L dargestellt.

Wenn das Kanalrohr K einen exakt kreisförmigen Querschnitt hat wenn das Kanalrohr K ohne Neigung, also exakt horizontal verläuft, erscheinen die von den kegelmantelförmigen Laserstrahlen mit unterschiedlichen Divergenzwinkeln auf der Kanalwand erzeugten Linien L als unverzeichnete Kreislinien, die in der Seitenansicht als gerade senkrechte Striche erscheinen, wie in Figur 1 dargestellt.

Das von der Kamera 1 dann gesehene Bild ist in Figur 1 links neben dem im Längsschnitt dargestellten Kanalrohr gezeigt. Die fünf im Längsschnitt des Kanalrohrs K in Figur 1 als senkrechte Linien erscheinenden Laserauftrefflinien L erscheinen in dem von der Kamera gesehenen Bild wegen der Zentralperspektive als konzentrische Kreise.

Der Wasserpegel im Kanalrohr ist in dem von der Kamera gesehenen Bild durch die horizontale Linie P dargestellt; die seitlichen Begrenzungen des fließenden Wasservolumens erscheinen als die beiden von den Enden der Pegellinie P an der beiderseitigen Kanalwand zum Fluchtpunkt verlaufenden Schenkel des von der Kamera gesehenen Wasserflusses oder Flusses einer sonstigen Flüssigkeit.

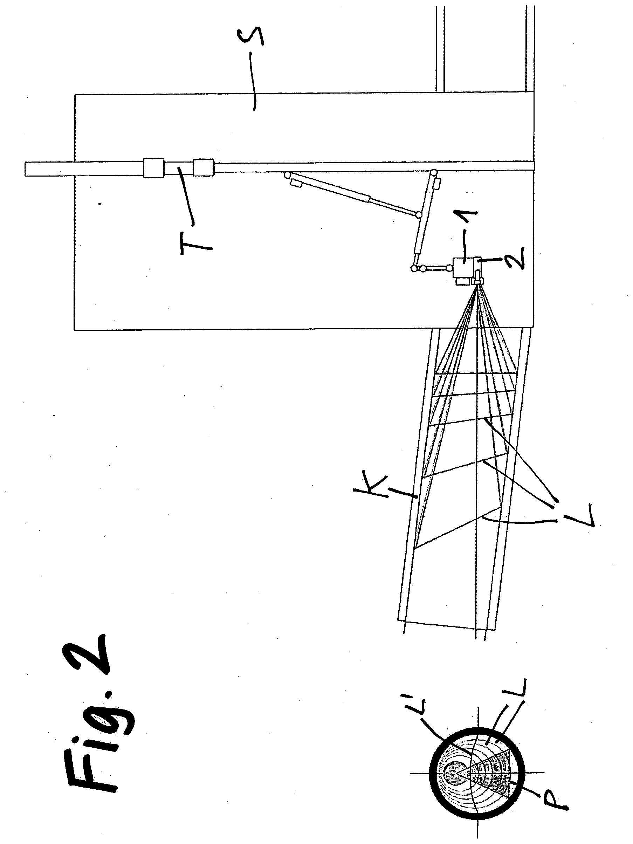

Figur 2 zeigt die schematische Darstellung der Anordnung wie in Figur 1 mit dem Unterschied, dass nun das Kanalrohr K, wie das in der Praxis der Fall ist, mit einer Neigung, also einem das Fließen des Wassers oder der sonstigen Flüssigkeit bewirkenden Gefälle verläuft. Zu Erläuterungszwecken ist dabei in Figur 2 eine ziemlich starke Neigung des Kanalrohrs K gezeigt. Die Kamera-Laser-Kombination 1, 2 ist ebenso wie in Figur 1 im Kanalschacht S an einem Traggestell T angeordnet und in gleicher Weise zentrisch zu dem kreisförmigen Kanalrohrquerschnitt positioniert und exakt horizontal sowie seitlich exakt parallel zur Kanalrohrachse ausgerichtet. Die horizontale optische Achse der Kamera-Laser-Kombination 1, 2 und die geneigte Kanalrohrachse schließen also einen der Neigung des Kanalrohrs K entsprechenden Winkel ein.

Im Gegensatz zu der Situation in Figur 1 erzeugen nun die fünf von dem Laser 2 erzeugten kegelmantelförmigen Laserstrahlen keine in der Seitenansicht als parallele senkrechte Linien erscheinende Auftrefflinien mehr, sondern diese fünf Auftrefflinien sind mit wachsender Entfernung von der Kamera-Laser-Kombination in der Seitenansicht zunehmend geneigt, so dass sie einen Fächer bilden.

In Figur 2 ist wiederum links neben dem im Längsschnitt gezeigten Kanalrohr K das von der Kamera 1 gesehene Bild dargestellt. Die dort wiederum sichtbaren Laserauftrefflinien L erscheinen nun im Gegensatz zu Figur 1, wo die Situation eines horizontalen Kanalrohrs dargestellt ist, nicht mehr als konzentrische Kreise, sondern exzentrisch verzeichnet. Das Maß dieser exzentrischen Verzeichnung entspricht der Größe der Neigung des Kanalrohrs.

Aus dieser Verzeichnung kann also die Neigung des Kanalrohrs K berechnet werden. Diese Berechnung kann mittels eines Computers erfolgen, der an die Kamera 1 angeschlossen ist und das von der Kamera erfasste Bild auswertet und aus der Lage der im Bild ersichtlichen Laserauftrefflinien die Neigung des Kanalrohrs K berechnet.

Da die Fließgeschwindigkeit direkt abhängig von der Neigung des Kanalrohrs ist, also eine fixe physikalische Größe darstellt, kann aus der Neigung des Kanalrohrs unmittelbar die Fließgeschwindigkeit des Wassers oder einer anderen Flüssigkeit berechnet werden, wobei natürlich die Fließgeschwindigkeit auch von der Viskosität der jeweiligen Flüssigkeit abhängt, die aber ebenfalls bekannt oder ansonsten messbar ist.

Auch in Figur 2 ist in dem von der Kamera gesehenen Bild die Wasserpegellinie P sichtbar. Diese trennt den gesamten Kanalrohrquerschnitt in den vom fließenden Wasser eingenommenen Fließquerschnitt und in einen Lichtquerschnitt auf. Da der Gesamtquerschnitt des Kanalrohrs aufgrund des bekannten Kanalrohrdurchmessers bekannt ist, kann durch die optische Erfassung des Fließquerschnitts mittels der Kamera 1 und der Auswertung wiederum über einen Computer der flächenmäßige Anteil des Fließquerschnitts am Gesamtquerschnitt des Kanalrohrs berechnet werden, und aus dem so ermittelten Fließquerschnitt des Wassers oder der sonstigen Flüssigkeit und der aus der Rohrneigung und der Viskosität der Flüssigkeit abgeleiteten Fließgeschwindigkeit kann die Durchflussmeng pro Zeiteinheit berechnet werden.

Der Laser 2 kann vorteilhafterweise mit einem Kreuzlaser kombiniert sein, der einen kreuzförmigen Laserstrahl mit einer vertikalen und einer horizontalen Kreuzkomponente erzeugt. Dabei ist der Kreuzlaser (nicht eigens dargestellt) fixer Bestandteil der Kamera-Laser-Kombination 1, 2, so dass die optische Achse des Kreuzlasers parallel zu den optischen Achsen der Kamera 1 und des Lasers 2 ist. Die vom auftreffenden Kreuzlaserstrahl im Kanalrohr erzeugten kreuzförmigen Linien sind in den in den Figuren 1 und 2 dargestellten, von der Kamera 1 gesehenen Bildern ebenfalls eingezeichnet. In Figur 1, wo das Kanalrohr horizontal verläuft, erscheinen die Kreuzlaser-Auftrefflinien L' als unverzeichnetes zentriertes Kreuz. Der Kreuzlaser ist insbesondere hilfreich bei der seitenmäßigen Zentrierung der optischen Achsen der Kamera-Laser-Kombination 1, 2.

Bei geneigtem Kanalrohr, wie in Figur 2 dargestellt, erscheint die horizontale Kreuzlaser-Auftrefflinie L', wie man aus dem dargestellten, von der Kamera erfassten Bild erkennt, als in Gestalt einer nach oben verlaufenden Wölbung verzeichnet, wobei der Grad dieser Verzeichnung wiederum von der Neigung des Kanalrohrs (K) abhängt. Das Maß der Verzeichnung der horizontalen Kreuzlaser-Auftrefflinie L' ist also ebenfalls unmittelbar ein Maß für die Neigung des Kanalrohrs K.

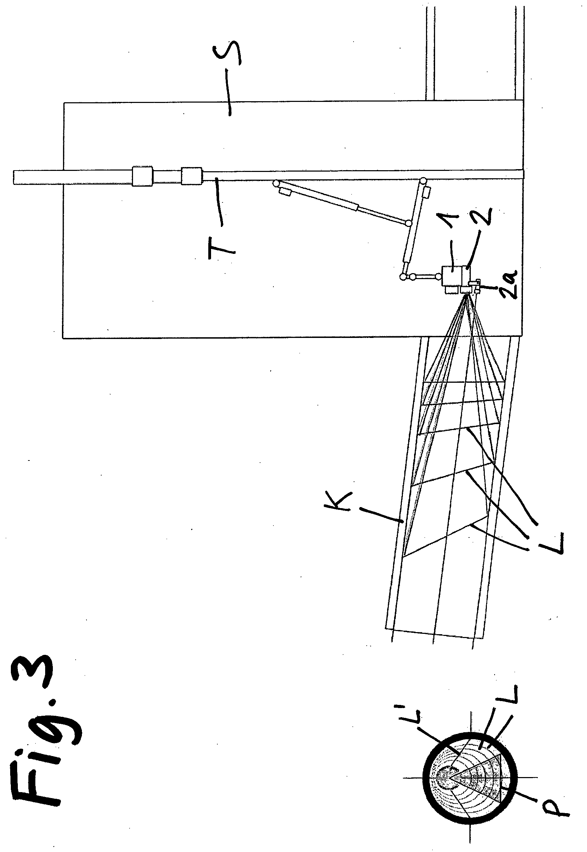

Figur 3 zeigt eine Abwandlung der Anordnung nach Figur 2, wobei die Kamera-Laser-Kombination 1, 2 noch durch einen Kreuzlaser 2a ergänzt ist, der ein Laserkreuz mit einer vertikalen und einer horizontalen Linie in das Rohr projiziert. Dieser Kreuzlaser 3, anders als der mit der Kamera 1 horizontal ausgerichtete Laser 2, wird automatisch nachjustierend exakt mit der Kanalrohrachse fluchtend ausgerichtet, so dass bereits aus dem mittels einer Neigungsmeßeinrichtung erfaßten Winkel des Kreuzlasers 2a die Neigung des Rohrs errechnet werden kann. Bei dieser Variante haben die vom Laser 2 erzeugten kreisförmigen Laserauftrefflinien L nur eine Hilfsfunktion. Denn sie dienen nur der Zentrierung des Kreuzlasers, der sich immer nach der maximalen Breite und Höhe im Rohr, also in der Mitte des Rohrdurchmessers, orientiert.

Wie man aus Figur 3, nämlich der dortigen Abbildung des von der Kamera 1 gesehenen Bilds, auch sieht, ist dort die horizontale Kreuzlaser-Auftrefflinie nicht mehr bogenförmig gewölbt verzeichnet, sondern hat die Gestalt zweier gerader, auf den Fluchtpunkt zulaufenden Linien L'.

Eine weitere, nicht dargestellte Variante, die aber schon eingangs beschrieben wurde, besteht, ausgehend von der Anordnung in Figur 2, darin, dass die Kamera-Laser-Kombination 1, 2 mit ihrer optischen Achse nicht horizontal ausgerichtet wird, sondern auf eine exakt der Neigung des Kanalrohrs entsprechende Neigung eingestellt wird. Dies kann in der Weise, wiederum automatisch mit Hilfe eines Computers erfolgen, in dem die Neigung der Kamera-Laser-Kombination 1, 2 solange verändert und justiert wird, bis die Laserauftrefflinien L in dem geneigten Kanalrohr K ebenso wie bei der Darstellung in Figur 1 als exakte konzentrische Kreislinien erscheinen. Dann kann aus der beispielsweise mittels einer Neigungsmeßeinrichtung erfassten Neigung der optischen Achse der Kamera-Laser-Kombination 1, 2 der Neigungswinkel unmittelbar übernommen und zur Berechnung der Fließgeschwindigkeit herangezogen werden. Der Fließquerschnitt des Wassers oder der sonstigen Flüssigkeit im Kanalrohr K wird dabei in gleicher Weise von der Kamera gesehen. Auch bei dieser Version ist die Verwendung eines Kreuzlasers hilfreich.

Bei allen oben beschriebenen Ausführungsformen erfolgen vorzugsweise alle Positionier- und Justiervorgänge sowie die Auswertungen der von der Kamera 1 gesehenen Bilder rechnergesteuert, um eine möglichst hohe Präzision zu erreichen. Selbstverständlich kann aber das Ausrichten der Kamera-Laser-Kombination mit allen zugehörigen Komponenten auch manuell erfolgen, indem die Steuerung der Positionier- und Justiervorgänge anhand eines auf einem Bildschirm angezeigten, von der Kamera 1 übertragenen Bild erfolgt.

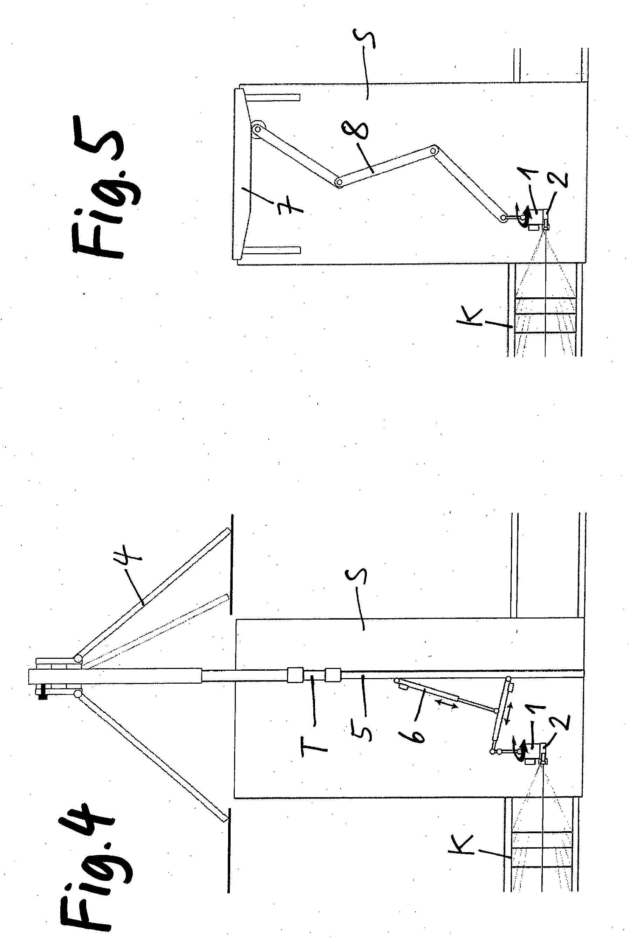

Figur 4 zeigt schematisch den praktischen Aufbau einer Messanordnung im Kanalschacht S mittels eines Dreibeinstativs 4 oder einer anderen Aufstellvorrichtung, die über der Kanalschachtöffnung aufgestellt wird, und die das Traggestell T hält. Bei dem dargestellten Ausführungsbeispiel in Figur 4 ist das Traggestell durch ein nach unten bis zum Anstoßen am Kanalschachtboden ausfahrbares Teleskoprohr 5 gebildet, das eine Tragsäule darstellt, an welchem ein bewegliches Gestänge 6 zur Halterung und Justierung der Kamera-Laser-Kombination 1, 2 angeordnet ist.

Figur 5 zeigt schematisch eine andere Ausführungsform zum praktischen Aufbau einer Messanordnung in Gestalt eines oben in die obere Kanalschachtöffnung eingelegten horizontalen Trägers 7 mit einem daran angeordneten Gelenkarm 8, an dessen unterem Ende über ein Gestänge 9 die Kamera-Laser-Kombination 1, 2 in der erforderlichen Weise beweglich und justierbar angeordnet ist.

Der Gelenkarm 8 in Figur 5 kann ein Roboterarm sein, der aus einer zum Träger 7 hin gefalteten Ruheposition in eine Arbeitsposition ausgefahren werden kann und dabei die Kamera-Laser-Kombination 1, 2 automatisch mit Bezug auf die Kanalrohrachse justiert.

Gemäß einer nicht dargestellten weiteren Variante kann das Prinzip nach Figur 5 auch dergestalt umgesetzt werden, dass ein Träger mit einem nach unten in den Kanalschacht S hinein entfaltbaren Gelenkarm, Teleskoparm oder dergleichen an einem Fahrzeug angeordnet ist, beispielsweise am Fahrzeugheck oder mittels eines Schlittens aus einem Fahrzeugaufbau rückwärts oder seitwärts ausfahrbar angeordnet ist. Das Fahrzeug wird dann in entsprechender Position an einem Kanalschacht aufgestellt und beispielsweise durch ausfahrbare Stützfüße stabil abgestützt, so dass die Messeinrichtung mit der notwendigen Präzision in den Kanalschacht eingefahren werden kann.

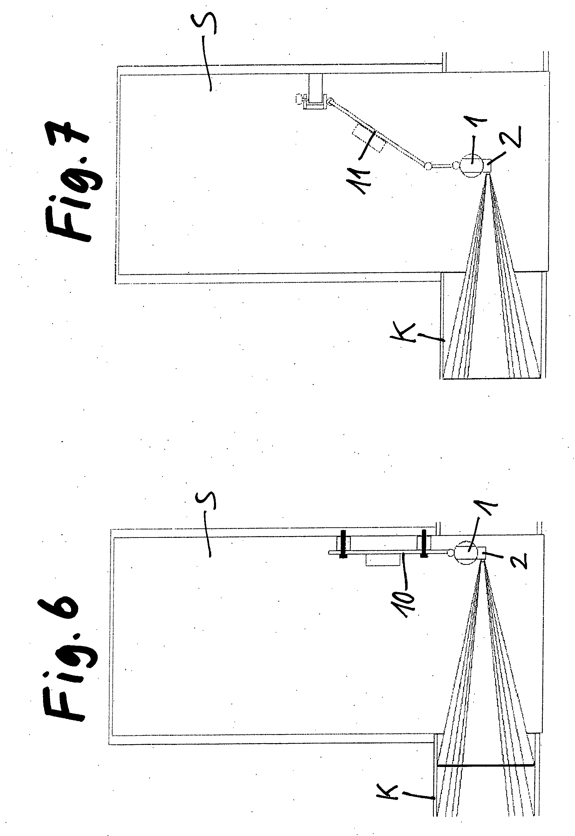

Figur 6 zeigt in sehr schematischer Darstellung eine in einem Kanalschacht S fest montierte Messanordnung, wobei ein Träger 10 die Kamera-Laser-Kombination 1, 2 trägt, der an einer Kanalschachtwand montiert ist. Die Montage des Trägers 10 kann dabei entweder unmittelbar über entsprechende Befestigungs- oder Halterungsmittel an der Kanalschachtwand erfolgen, oder sie kann an einer in einem Kanalschacht üblicherweise vorhandenen und fest mit der Kanalwand verbundenen Leiter erfolgen. Mit einer solchen im Kanalschacht angebrachten Messanordnung können Langzeitmessungen durchgeführt werden, die entweder als kontinuierliche Messungen oder als Intervall-Messungen durchgeführt werden können. Dazu kann die Messanordnung entweder dauerhaft oder vorübergehend für einen entsprechenden, für die Langzeitmessung vorgesehenen Zeitraum im Kanalschacht angebracht werden.

Der Träger 10, der in Figur 6 nur ganz schematisch gezeigt ist, kann dabei vorzugsweise eine Teleskopstange, einen vertikal verfahrbaren Schlitten oder dergleichen aufweisen, an deren oder dessen unterem Ende die Kamera-Laser-Kombination 1, 2 angeordnet ist, um die Kamera-Laser-Kombination 1, 2 aus der Messposition in eine Ruheposition anheben und aus dieser in die Messposition absenken zu können. Das ist besonders im Hinblick darauf bedeutsam, dass der Flüssigkeitspegel im Kanalrohr K, insbesondere bei Abwasserkanälen, ganz erheblich schwanken kann. Durch Hochfahren aus der Messposition kann dann die Kamera-Laser-Kombination vor einem Überfluten geschützt werden. Gerade wenn Langzeitmessungen in Gestalt von Intervall-Messungen durchgeführt werden, ist es sinnvoll, die Kamera-Laser-Kombination nur für den jeweiligen Messvorgang in die Messposition abzusenken und danach wieder in die Ruheposition anzuheben.

Figur 7 zeigt eine abgewandelte Ausführungsform einer im Kanalschacht für Langzeitmessungen dauerhaft oder zeitweilig angebrachten Messanordnung, die von der Ausführungsform nach Figur 6 dadurch abweicht, dass statt eines an der Kanalschachtwand montierten vertikalen Trägers 10 ein mit seinem oberen Ende an der Kanalschachtwand montierter Träger 11 in Gestalt eines Gelenkarms vorgesehen ist, der wiederum, ebenso wie die Ausführungsform nach Figur 6, ein Absenken der Kamera-Laser-Kombination 1, 2 in eine Messposition und ein Anheben der Kamera-Laser-Kombination 1, 2 in eine Ruheposition ermöglicht.

Das Betreiben von dauerhaft oder zeitweilig in einem Kanalschacht für Langzeitmessungen montierten Messanordnungen nach den Figuren 6 und 7 kann durch Solarstrom erfolgen, der über Solarzellen bereitgestellt wird. Dazu können Solarzellen in Öffnungen eines Kanalschachtdeckels vorgesehen sein.

Es versteht sich, dass die oben beschriebenen Messungen nicht davon abhängig sind, dass der Kanalrohrquerschnitt kreisrund ist. Vielmehr können die Messungen auch in Kanalrohren mit anderer Geometrie wie eiförmig oder dergleichen erfolgen, wobei dann die vom Laser 2 erzeugten gefächerten Laserstrahlen beim Auftreffen auf der Kanalrohrwand eine entsprechend abweichende Form haben, wobei dann aber wiederum eine konzentrische oder je nach Neigung des Kanalrohrs exzentrisch verzeichnete Anordnung ineinander liegender Laserauftrefflinien erscheint.

Da die Divergenzwinkel der vom Laser 2 erzeugten kegelmantelförmigen Laserstrahlen bekannt sind und daher die gegenseitigen Abstände aufeinanderfolgender Laserstrahl-Auftrefflinien L auf der Kanalrohrwand und ebenso in der von der Kamera 1 erfassten Abbildung in einem direkten Zusammenhang mit dem Kanalrohrdurchmesser stehen, kann allein aufgrund der optischen Erfassung des Bilds der Laserstrahl-Auftrefflinien (L) durch die Kamera 1 daraus auch der Durchmesser des Kanalrohrs gemessen und bei einer von der Kreisform abweichenden Querschnittsform aus dem Verlauf der Laserstrahl-Auftrefflinien auch die geometrischen Form mit den Abmessungen des Kanalrohrquerschnitts ermittelt werden.

Des weiteren gibt der Verlauf der Laserstrahl-Auftrefflinien L Aufschluss darüber, ob der Kanalrohrquerschnitt oder dessen Rundheit konstant ist oder an einer Stelle seines Verlaufs eine Anomalie, beispielsweise in Gestalt einer Eindellung oder einer Ausbuchtung hat. Dies führt zu einer entsprechenden Verzerrung der betreffenden Laserstrahl-Auftrefflinie L. Auch das kann erfasst werden, und rechnergesteuert kann dann die Erfassung des Fließquerschnitts so erfolgen, dass sie bei Erkennen eines abnormalen Verlaufs einer Auftrefflinie nicht dort, sondern an der Stelle einer anderen, nicht abnormalen Auftrefflinie erfolgt.

## Patentansprüche

1. Verfahren zur Durchflussmessung in Kanalrohren, wobei von einem Kanalschacht (S) aus mittels einer optischen Kamera (1) ein Bild des Kanalrohrquerschnitts mit dem darin als horizontale Grenzlinie sichtbaren Fließpegel des Flüssigkeitsstroms im Kanalrohr erzeugt und aus der im Bild durch den Fließpegel (P) begrenzten Fließquerschnittsfläche im Verhältnis zur Gesamtquerschnittsfläche des Kanalrohr-Querschnittsbilds und der bekannten Geometrie und Abmessungen des Kanalrohrs der tatsächliche Fließquerschnitt der Flüssigkeit berechnet und hieraus und aus einer ermittelten Fließgeschwindigkeit des Flüssigkeitsstroms die Durchflussmenge pro Zeiteinheit errechnet wird,
**dadurch gekennzeichnet, dass** die Fließgeschwindigkeit des Flüssigkeitsstroms aus einer Messung der Neigung des Kanalrohrs (K) abgeleitet wird, die mit Hilfe einer im Kanalschacht positionierten Messeinrichtung mit einer optischen Kamera (1) und einem Laser (2), der über eine diffraktive Linse eine Mehrzahl von dünnen ringförmigen Laserstrahlen in Gestalt von dünnen Kegelmänteln mit unterschiedlichen Divergenzwinkeln erzeugt, wobei die optischen Achsen des Lasers (2) und der Kamera (1) parallel verlaufen und die Kamera-Laser-Kombination (1, 2) mit der optischen Achse des Lasers zentrisch zum Kanalrohrquerschnitt platziert wird, nach einem der zwei folgenden Verfahren erfolgt:
a) Die Kamera-Laser-Kombination wird mit ihren optischen Achsen exakt horizontal und seitlich in einer die Kanalrohrachse enthaltenden Vertikalebene ausgerichtet, so dass die an der Kanalwand auftreffende Mehrzahl von Laserstrahlen axial beabstandete kreisförmige Auftrefflinien (L) erzeugen, die in dem von der Kamera (1) gesehenen Bild je nach Neigung des Kanalrohrs mehr oder weniger stark exzentrisch verzeichnet sind, wobei aus dem Maß der exzentrischen Verzeichnung der Laserstrahl-Auftrefflinien in dem von der Kamera (1) gesehenen Bild die Neigung des Kanalrohrs (K) berechnet wird, oder
b) die Neigung der Kamera-Laser-Kombination (1, 2) wird so eingestellt, dass die seitlich in der die Kanalrohrachse enthaltenden Vertikalebene ausgerichtete optische Achse des Lasers parallel zur Kanalrohrachse verläuft, was dann der Fall ist, wenn die auf dem von der Kamera (1) erfassten Bild die von der Mehrzahl der Laserstrahlen an der Kanalwand erzeugten Laserstrahl-Auftrefflinien exakt konzentrisch verlaufen, wobei dann die eingestellte Neigung der Kamera-Laser-Kombination (1, 2) der Neigung des Kanalrohrs entspricht.

2. Verfahren nach Anspruch 1, wobei der Laser (2) mit einem Kreuzlaser kombiniert ist, der einen dünnen kreuzförmigen Laserstrahl mit einer vertikalen und einer horizontalen Kreuzkomponente erzeugt, und dessen optische Achse parallel zur optischen Achse des Lasers (2) verläuft.

3. Verfahren nach Anspruch 1 in der Variante a), wobei der Kamera-Laser-Kombination (1, 2) ein Kreuzlaser (2a) zugeordnet ist, der einen kreuzförmigen Laserstrahl mit einer vertikalen und einer horizontalen Kreuzkomponente erzeugt und dessen optische Achse in derselben Vertikalebene wie die optischen Achsen der Kamera-Laser-Kombination verläuft, wobei jedoch der Kreuzlaser relativ zur Kamera-Laser-Kombination (1, 2) neigbar ist und zentrisch mit Bezug auf das Kanalrohr ausgerichtet wird, und wobei anstelle der Auswertung des Ausmaßes der exzentrischen Verzeichnung die eingestellte Neigung des Kreuzlasers als Neigung des Kanalrohrs (K) ausgewertet wird.

4. Verfahren nach einem der Ansprüche 1 bis 3, wobei die Positionierung und/oder die exakte Ausrichtung der Kamera-Laser-Kombination (1, 2) und, falls vorgesehen, eines relativ dazu neigbaren Kreuzlasers (2a) computergesteuert unter Auswertung des jeweils von der Kamera (1) gesehenen Bilds über motorische Antriebe erfolgt.

5. Verfahren nach einem der Ansprüche 1 bis 4, wobei die Kamera-Laser-Kombination (1, 2) an einem zeitweilig im Kanalschacht (S) aufgestellten oder positionierten Traggestell (T) über bewegliche Einstell- und Justiermittel angeordnet wird und in die Messposition bringbar ist.

6. Verfahren nach Anspruch 5, wobei ein an einem Fahrzeug, das am Kanalschacht (S) aufgestellt wird, angebrachtes und in den Kanalschacht (S) absenkbares Traggestell (T) zur Halterung der Kamera-Laser-Kombination (1, 2) verwendet wird.

7. Verfahren nach einem der Ansprüche 1 bis 4, wobei zur Halterung und Positionierung der Kamera-Laser-Kombination (1, 2) ein Gelenkarm (8) verwendet wird, der an einem in der oberen Kanalschachtöffnung positionierbaren Träger (7) angeordnet und zwischen einer zum Träger (7) hin zusammengefalteten Ruheposition und einer die Kamera-Laser-Kombination (1, 2) in die Messposition bringenden entfalteten Position verstellbar ist.

8. Verfahren nach einem der Ansprüche 1 bis 4, wobei die Kamera-Laser-Kombination (1, 2) an einem im Kanalschacht (S) an der Kanalschachtwand montierbaren Träger (10; 11) angeordnet wird, der als Teleskopträger (10), als Gelenkträger (11), oder mit einem verfahrbaren Trägerschlitten, an welchem die Kamera-Laser-Kombination (1, 2) angeordnet ist, ausgebildet ist und das Bewegen der Kamera-Laser-Kombination (1, 2) zwischen einer Messposition und einer aus dieser in den Kanalschacht (S) angehobenen Ruheposition ermöglicht.

9. Verfahren nach einem der Ansprüche 1 bis 4, wobei das Verfahren als Langzeitmessung in Gestalt einer kontinuierlichen Messung oder einer Intervallmessung durchgeführt wird.

10. Verfahren nach einem der Ansprüche 1 bis 9, wobei aus dem von der Kamera (1) erfaßten Bild der Laserstrahl-Auftrefflinien (L) und den bekannten Divergenzwinkeln der vom Laser erzeugten Laserstrahlen und deren gegenseitigen Abständen und deren Verlauf im erfaßten Bild der Durchmesser des Kanalrohrs (K) oder bei Abweichen des Kanalrohrquerschnitts von der Kreisform dessen Geometrie und Abmessungen ermittelt wird.

## Claims

1. A method for measuring the flow rate in sewer pipes, wherein an image of the sewer pipe cross-section with the flow level of the liquid flow in the sewer pipe visible therein as a horizontal boundary line is generated from a sewer shaft (S) by means of an optical camera (1), and the actual flow cross-section of the liquid is calculated from the flow cross-sectional area limited in the image by the flow level (P) in relation to the total cross-sectional area of the cross-sectional image of the sewer pipe and the known geometry and dimensions of the sewer pipe, and the flow rate per unit time is calculated therefrom as well as from a determined flow velocity of the liquid flow,
**characterised in that** the flow velocity of the liquid flow is derived from a measurement of the inclination of the sewer pipe (K) by means of a measurement device positioned in the sewer shaft and having an optical camera (1) and a laser (2) that, by means of a diffractive lens, creates a plurality of narrow annular laser beams in the form of thin cone surfaces with different convergence angles, wherein the optical axes of the laser (2) and the camera (1) extend in parallel and the camera/laser combination (1, 2) is placed with the optical axis of the laser centered in relation to the cross-section of the sewer pipe, wherein the measurement is performed according to one the following two methods:
a) the camera/laser combination is oriented with their optical axes exactly horizontally, and laterally in a vertical plane containing the axis of the sewer pipe, so that the plurality of laser beams incident on the sewer wall create axially spaced circular incident lines (L) that are inscribed as more or less eccentric in the image viewed by the camera (1), depending on the inclination of the sewer pipe, wherein, from the quantity of eccentric registration of the incident lines of the laser beams in the image seen by the camera (1), the inclination of the sewer pipe (K) is calculated, or
b) the inclination of the camera/laser combination (1, 2) is adjusted in a way that the optical axis of the laser that is aligned in the vertical plane containing the axis of the sewer pipe extends in parallel to the axis of the sewer pipe, which occurs when the incident lines of the laser beams created by the plurality of laser beams on the sewer wall on the image detected by the camera (1) have an exactly concentric extension, and the adjusted inclination of the camera/laser combination (1, 2) thus corresponds to the inclination of the sewer pipe.

2. The method according to claim 1, wherein the laser (2) is combined with a cross-hair laser that creates a thin cross-hair laser beam having a vertical and a horizontal cross-hair component, and that has its optical axis in parallel with the optical axis of the laser (2).

3. The method according to claim 1 in the variant a), wherein the camera/laser combination (1, 2) is associated with a cross-hair laser (2a) that creates a thin cross-hair laser beam having a vertical and a horizontal cross-hair component, and that has its optical axis in the same vertical plane as the optical axes of the camera/laser combination, but wherein the cross-hair laser can be inclined relative to the camera/laser combination (1, 2) and is aligned in a centered manner relative to the sewer pipe, and wherein the adjusted inclination of the cross-hair laser is evaluated as the inclination of the sewer pipe (K) instead of evaluating the quantity of the eccentric registration.

4. The method according to any one of claims 1 to 3, wherein the positioning and/or the exact alignment of the camera/laser combination (1, 2) and, if provided, of a cross-hair laser (2a) that can be inclined relative thereto, is computer-controlled by means of motorized drives, by evaluating the respective image seen by the camera (1).

5. The method according to any one of claims 1 to 4, wherein the camera/laser combination (1, 2) is arranged and can be brought into the measuring position on a carrying rig (T) temporarily set up or positioned in the sewer shaft (S), by means of moveable setting and adjusting means.

6. The method according to claim 5, wherein a carrying rig (T) that is mounted on a vehicle placed on the sewer shaft (S) and can be lowered into the sewer shaft (S) is used for mounting the camera/laser combination (1, 2).

7. The method according to any one of claims 1 to 4, wherein for mounting and positioning the camera/laser combination (1, 2) an articulated arm (8) is used, the arm being arranged on a carrier (7) that can be positioned in the upper opening of the sewer shaft, and being adjustable between a resting position folded back towards the carrier (7) and a folded-out position bringing the camera/laser combination (1, 2) into the measuring position.

8. The method according to any one of claims 1 to 4, wherein the camera/laser combination (1, 2) is arranged on a carrier (10, 11) mountable on the wall of the sewer shaft in the sewer shaft (S), the carrier being configured as a telescopic carrier (10), as an articulated carrier (11), or having a displaceable carrying carriage on which the camera/laser combination (1, 2) is arranged, and enabling the movement of the camera/laser combination (1, 2) between a measuring position and a resting position in which it is raised relative to the measuring position into the sewer shaft (S).

9. The method according to any one of claims 1 to 4, wherein the method is carried out as a long-term measurement in the form of a continued measurement or as a measurement in intervals.

10. The method according to any one of claims 1 to 9, wherein the diameter of the sewer pipe (K), or if the cross-section of the sewer pipe deviates from a circular form, its geometry and dimensions is/are determined from the image of the incident lines (L) of the laser beams, the known divergence angles of the laser beams produced by the laser, their mutual distances and their course in the detected image.

## Revendications

1. Procédé de mesure de débit dans des canalisations d'égout, dans lequel une image de la section transversale de la canalisation d'égout, avec le niveau du débit du courant de liquide visible sous forme de ligne de limite horizontale dans la canalisation d'égout, est produite au moyen d'une caméra optique (1) à partir d'un puits de canalisation (S), et la section transversale d'écoulement réelle du liquide est calculée à partir de la surface de la section transversale d'écoulement limitée par le niveau du débit (P) dans l'image par rapport à la surface de la section transversale totale de l'image de section transversale de la canalisation d'égout et de la géométrie et des dimensions de la canalisation d'égout connues, et le débit par unité de temps est calculé de cette section transversale d'écoulement réelle et d'une vitesse d'écoulement déterminée du courant de liquide,
**caractérisé en ce que** la vitesse d'écoulement du courant de liquide est dérivée d'une mesure de l'inclinaison de la canalisation d'égout (K) au moyen d'un dispositif de mesure positionné dans le puits de canalisation et ayant une caméra optique (1) et un laser (2) qui produit, au moyen d'une lentille réfractive, une pluralité de faisceaux laser fins et annulaires sous forme de surfaces coniques avec des angles de divergence différents, les axes optiques du laser (2) et de la caméra (1) s'étendant en parallèle et la combinaison caméra / laser (1, 2) étant placée avec l'axe optique du laser centré par rapport à la section transversale de la canalisation d'égout, la mesure étant effectuée selon l'une quelconque des deux procédés suivants :
a) la combinaison caméra / laser est orientée avec leurs axes optiques exactement horizontales et latéralement dans un plan vertical contenant l'axe de la canalisation d'égout, de telle manière que la pluralité de faisceaux laser incidents à la paroi de la canalisation produit des lignes d'incidence (L) circulaires et axialement espacées qui sont enregistrées de façon plus ou moins excentrique dans l'image vue par la caméra (1) en fonction de l'inclinaison de la canalisation d'égout, l'inclinaison de la canalisation d'égout (K) étant calculée à partir de la mesure de l'enregistrement excentrique des lignes d'incidence des faisceaux laser dans l'image vue par la caméra (1), ou
b) l'inclinaison de la combinaison caméra / laser (1, 2) est réglée de telle manière que l'axe optique du laser aligné latéralement dans le plan vertical contenant l'axe de la canalisation s'étend en parallèle à l'axe de la canalisation, ce qui se produit lorsque les lignes d'incidence des faisceaux laser produites par la pluralité de faisceaux laser sur la paroi de la canalisation et détectées sur l'image de la caméra (1) sont exactement concentriques, l'inclinaison réglée de la combinaison caméra / laser (1, 2) correspondant alors à l'inclinaison de la canalisation d'égout.

2. Procédé selon la revendication 1, dans lequel le laser (2) est combiné avec un laser croisé qui produit un faisceau laser fin sous forme de croix, avec une composante de croix verticale et une composante de croix horizontale, et dont l'axe optique s'étend en parallèle à l'axe optique du laser (2).

3. Procédé selon la revendication 1 dans la variante a), dans lequel la combinaison caméra / laser (1, 2) est associée avec un laser croisé (2a) qui produit un faisceau laser sous forme de croix avec une composante de croix verticale et une composante de croix horizontale et dont l'axe optique s'étend dans le même plan vertical que les axes optiques de la combinaison caméra / laser, dans lequel, cependant, le laser croisé est inclinable par rapport à la combinaison caméra / laser (1, 2) et est aligné de manière centrée par rapport à la canalisation d'égout, et dans lequel, au lieu d'évaluer la mesure de l'enregistrement excentrique, l'inclinaison réglée du laser croisé est évaluée en tant qu'inclinaison de la canalisation d'égout (K).

4. Procédé selon l'une quelconque des revendications 1 à 3, dans lequel le positionnement et/ou l'alignement exact de la combinaison caméra / laser (1, 2) et, le cas échéant, d'un laser croisé (2a) inclinable par rapport à celle-ci, est effectuée par actionneurs motorisés sous commande par ordinateur en évaluant l'image respectivement vue par la caméra (1).

5. Procédé selon l'une quelconque des revendications 1 à 4, dans lequel la combinaison caméra / laser (1, 2) est disposée et peut être mise dans la position de mesure, par l'intermédiaire des moyens de réglage et ajustage mobiles, sur un châssis porteur (T) installé ou positionné temporairement dans le puits de canalisation (S).

6. Procédé selon la revendication 5, dans lequel un châssis porteur (T) qui est monté sur un véhicule situé au niveau du puits de canalisation (S) et qui peut être abaissé dans le puits de canalisation (S) est utilisé pour supporter la combinaison caméra / laser (1, 2).

7. Procédé selon l'une quelconque des revendications 1 à 4, dans lequel un bras articulé (8) est utilisé pour monter et positionner la combinaison caméra / laser (1, 2), le bras étant disposé au niveau d'un support (7) qui peut être positionné dans l'ouverture supérieure du puits de canalisation, et pouvant être ajusté entre une position de repos repliée vers le support (7) et une position développée mettant la combinaison caméra / laser (1, 2) dans la position de mesure.

8. Procédé selon l'une quelconque des revendications 1 à 4, dans lequel la combinaison caméra / laser (1, 2) est disposée sur un support (10 ; 11) qui peut être monté au niveau de la paroi de la canalisation dans le puits de canalisation (S), le support pouvant être configuré sous forme de support télescopique (10), sous forme de support articulé (11), ou avec un chariot porteur déplaçable sur lequel la combinaison caméra / laser (1, 2) est disposée, et permettant le déplacement de la combinaison caméra / laser (1, 2) entre une position de mesure et une position de repos dans laquelle elle est relevée dans le puits de canalisation (S) par rapport à la position de mesure.

9. Procédé selon l'une quelconque des revendications 1 à 4, le procédé étant effectué comme mesure à long terme sous la forme d'une mesure continue ou d'une mesure d'intervalle.

10. Procédé selon l'une quelconque des revendications 1 à 9, dans lequel le diamètre de la canalisation d'égout (K), ou, si la section transversale de la canalisation d'égout s'écarte de la forme circulaire, la géométrie et les dimensions de celle-ci, est/sont déterminé/es à partir de l'image des lignes d'incidence (L) des faisceaux laser enregistrée par la caméra (1), les angles de divergence connus des faisceaux laser produits par le laser, leurs distances mutuelles et leur cours dans l'image enregistrée.
